# EUROPEAN PATENT APPLICATION

(11) **EP 0 657 741 A2**
(43) Date of publication of application: **14.06.1995**
(21) Application number: 94308194.3
(22) Date of filing: 08.11.1994
(51) Int. Cl.: G01R 31/02, H04Q 1/14, H04M 3/30

(54) **Cable management system with remote line testing through switch**

(30) Priority: 07.12.1993 US 163951
(71) Applicant: THE WHITAKER CORPORATION, Wilmington, Delaware 19808 (US)
(72) Inventor: Wise, James Henry, Palmyra, Pennsylvania 17078 (US)
(74) Representative: Warren, Keith Stanley

(57) **Abstract**

A cable management system which provides routing of wired services between service lines (16) and user lines (18). Each service line (16) enters the cable system at a service termination unit circuit card (22) which also holds a portion of a crosspoint switch matrix. Each user line (18) enters the system at a line termination unit circuit card (20). The service termination unit circuit cards (22) are all mounted to connectors (36) on a first side of a centerplane board (24) and the line termination unit circuit cards (2) are mounted to connectors (36) on the other side of the centerplane board. Pins (37) extending through the centerplane board (24) interconnect the connectors (36) on the opposed sides of the centerplane board (24) so that any service line (16) can be connected to any user line (18). A system controller card (26) mounted to the centerplane board (24) communicates with the circuit cards via a bus on the centerplane board (24). A line test circuit card (50) is mounted to one of the connectors on the first side of the centerplane board (24). The line test circuit card (50) contains a test unit (54) and a crosspoint switch matrix (146) so that the test unit can be connected to any of the user lines (18) in order to run tests of that user line.

## Description

This invention relates to a cable management system which provides routing of telephony, low and high speed data, power and video, between service lines and user lines under computer control and, more particularly, to such a system wherein testing of the user lines can be remotely effected by the system operator.

When wiring a commercial building, it is conventional that all of the services carried by wire, such as telephony, low and high speed data, power and video, enter the building for termination at respective patch panels. The patch panels are typically located within wiring closets and include a first array of terminations for the service lines which enter the building and a second array of terminations for the user lines which extend within the building to various user stations. Within each patch panel, the connections between the service lines and the user lines are made manually via jumper wires extending between the first array of terminations and the second array of terminations. In an ideal situation, records would be maintained as to where each wire goes within the building and to what it is connected. However, since the real world is not ideal, such records are not always properly maintained. In addition, wires are often tagged at the patch panels and the tags are lost or become outdated because of lack of updating. Therefore, when a technician is given a service order to add, move or change a connection, the technician must first determine exactly which physical wires are involved. This has proven to be a very time consuming and labor intensive chore. It has been proposed to provide a cable management system with automatic record keeping capability.

The proposed cable management system is interposed between a plurality of service lines and a plurality of user lines and includes a plurality of line termination unit circuit cards which provide connections to the user lines and a plurality of service termination unit circuit cards which provide connections to the service lines. Controllable switching means are coupled between the terminations to the user lines and the service lines for selectively providing physical electrical connections between selected ones of the service lines and selected ones of the user lines. A controller is provided to control the switching means to selectively make and open connections between the service lines and the user lines in accordance with received commands, the controller having a memory in which is stored a map of the connections made through the switching means. A management station is provided for issuing commands to the controller, the commands including a connect command to make a physical electrical connection through the switching means between a specified service line and a specified user line, and a disconnect command to open a physical electrical connection through the switching means between one or more specified service lines and one or more specified user lines.

In this cable management system, there is a centerplane board which has a first plurality of card edge connectors on a first side arranged in a first parallel array and a second plurality of card edge connectors on the other side arranged in a second parallel array orthogonal to the first parallel array. The first and second pluralities of card edge connectors are electrically interconnected through the centerplane board. The switching means are mounted on the service termination unit circuit cards and these cards are installed in the card edge connectors on the first side of the centerplane board. The line termination unit circuit cards are installed in the card edge connectors on the other side of the centerplane board. Accordingly, any one or more of the plurality of service lines can be connected to any one or more of the plurality of user lines through the switching means. The controller is mounted on a circuit card and installed in one of the card edge connectors on the first side of the centerplane board. A plurality of conductive bus lines are disposed on the centerplane board and are electrically interconnected to all the card edge connectors on both sides of the centerplane board. A respective transceiver coupled to the bus lines is provided on each of the controller card, the service termination unit cards and the line termination unit cards for effecting communications therebetween over the bus lines.

In such a system, if the system operator is notified of a problem on a particular user line, the operator may not be able to determine whether the problem is with the line itself or with the equipment connected to the line. This may result in two separate service technicians being called - one for the line and one for the equipment. It would be desirable for the operator to be able to isolate the problem so that only the appropriate service technician is called. It is therefore an object of the present invention to provide an arrangement by means of which tests can be performed on a user line without requiring the intervention of a service technician.

It would also be desirable to assess the "as-built" characteristics of each user line in order to have a data base which can be stored for future test comparisons to determine deviations from the "as-built" characteristics. Accordingly, it is a further object of the present invention to provide a user line testing arrangement of the type described which is controllable from the management station and which communicates the test results thereto.

The foregoing and additional objects of the present invention are attained in accordance with the principles of this invention in a cable management system interposed between a plurality of service lines and a plurality of user lines and including a plurality of service termination unit cards each connectable to a first predetermined number of respective ones of the plurality of service lines, a plurality of line termination unit cards each connectable to a second predetermined number of respective ones of the plurality of user lines, means for connecting each of the plurality of service termination unit cards to all of the plurality of line termination unit cards, and each of the plurality of service termination unit cards including switching means for selectively connecting one of the plurality of service lines connected to that service termination unit card to one of the plurality of user lines, by providing an arrangement for testing the plurality of user lines. The arrangement comprises a line test card and means for connecting the line test card to all of the line termination unit cards. The line test card includes testing means having an output port for evaluating a predetermined characteristic of a line connected to the output port and switching means for selectively connecting the output port to a selected one of the plurality of user lines.

In accordance with an aspect of this invention, the connecting means of the cable management system includes a centerplane board, a first plurality of card edge connectors on a first side of the centerplane board arranged in a first parallel array, a second plurality of card edge connectors on the other side of the centerplane board arranged in a second parallel array orthogonal to the first parallel array, and means for electrically connecting each of the first plurality of card edge connectors to each of the second plurality of card edge connectors through the centerplane board. Each of the plurality of service termination unit cards is mounted to a respective one of the first plurality of card edge connectors and each of the plurality of line termination unit cards is mounted to a respective one of the second plurality of card edge connectors. The line test card connecting means includes a dedicated card edge connector on the first side of the centerplane board, the dedicated card edge connector being parallel to the first plurality of card edge connectors, orthogonal to the second plurality of card edge connectors, and electrically connected to each of the second plurality of card edge connectors through the centerplane board.

In accordance with another aspect of this invention, the cable management system includes a management station for issuing commands to control the selective connections of the plurality of service lines to the plurality of user lines. The management station is further effective to control the line test card switching means to connect the output port to the selected one of the plurality of user lines and to control the testing means to evaluate the predetermined characteristic of the selected one of the plurality of user lines.

A tester in a cable management system comprising, multiple communications service lines interconnected to multiple communications user lines, multiple STU (service termination unit) cards connected to respective multiple service lines, multiple LTU (line termination unit) cards connected to respective multiple user lines, a line test card, a connecting unit interconnecting each of the STU cards and the line test card to every one of the LTU cards, a line tester for evaluating a user line connected to an output port of the line tester, and a switch matrix selectively connecting the output port to one of among many of the user lines.

An embodiment of the present invention will now be described by way of example with reference to the accompanying drawings in which like elements in different figures thereof are identified by the same reference numeral and wherein:
FIGURE 1 is a conceptual drawing showing the proposed cable management system discussed above;
FIGURE 2 is a block diagram of the cable management system of FIG. 1;
FIGURE 3A schematically depicts the rear of the interior of the cable management system enclosure showing the service termination unit circuit cards, the controller cards and the line test card;
FIGURE 3B schematically depicts the front of the interior of the cable management system enclosure showing the line termination unit circuit cards;
FIGURE 3C shows a first side of the centerplane board, which side is adapted to mount the service termination unit circuit cards, the controller cards and the line test card;
FIGURE 3D shows the other side of the centerplane board, which side is adapted to mount the line termination unit circuit cards;
FIGURE 3E schematically illustrates orthogonal edge connections of a service termination unit circuit card and a line termination unit circuit card to the centerplane board;
FIGURE 4 is a block diagram of an illustrative controller for the cable management system of FIG 2;
FIGURE 5 is a block diagram showing the circuitry on an illustrative line termination unit circuit card for the cable management system of FIG. 2;
FIGURE 6 is a block diagram showing the circuitry on an illustrative service termination unit circuit card for the cable management system of FIG. 2; and
FIGURE 7 is a block diagram showing the circuitry on an illustrative line test card for the cable management system of FIG. 2.

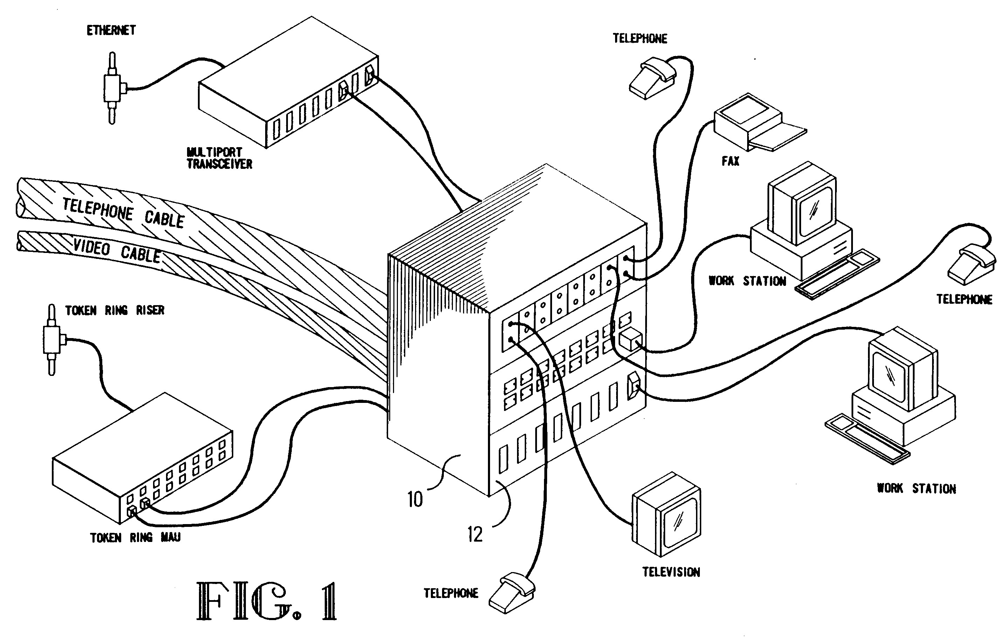

As shown in FIG. 1, the cable management system with which the present invention is concerned is contained within an enclosure 10 illustrated as having media-specific connectors on both its front surface 12 and its rear surface (not shown). The cable management system within the enclosure 10 serves as a flexible electronic patching, or cross-connecting, hub for automated cable management of communications circuits. Various services, such as LAN'S, telephone, computer I/O channels and peripherals, and video distribution links are connected to the cable management system through media-specific connectors on the rear surface or the enclosure 10. Typically, these will be aggregated multi-pair cables or high bandwidth cables, such as coax and fiber, common in riser and horizontal distribution subsystems. As shown in FIG. 1, such services include ethernet, telephone, video and token ring.

Matrix switch modules are installed within the enclosure 10. Media-specific connectors corresponding to the media selected for each user's work station subsystem wiring are installed on the front surface 12 and have cables which are attached and then run to the user's location. Thus, as shown in FIG. 1, at the user's location there may be one or more telephones, computer work stations, facsimile machines, or television sets. Once wired in this fashion, each user can be electronically connected to any combination of services that is required. All future changes in each user's service complement can be accomplished electronically.

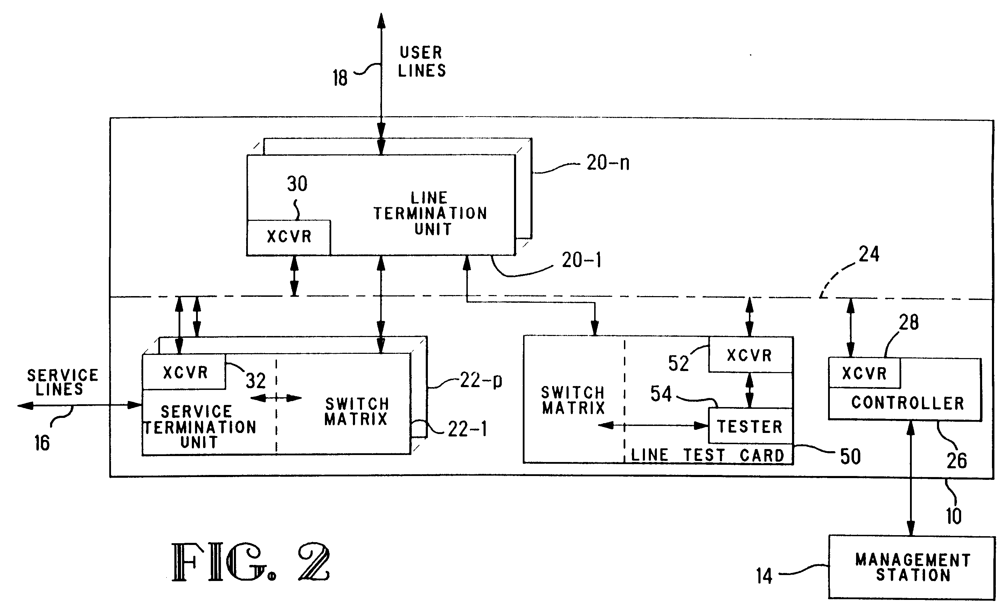

The cable management system within the enclosure 10 maintains a data base of the location, source and destination for each cable. The system is configured by a management station 14 (FIG. 2). As shown in FIG. 2, the cable management system contained within the enclosure 10 is connected to the service lines 16, which may be telephone lines, video lines, etc., which come to the system from the various service providers. The cable management system is also connected to the user lines 18 which extend to various user locations. The user lines 18 are each connected to a respective port on one of a plurality of line termination unit circuit cards 20-1,...,20-n. Similarly, the service lines 16 are each connected to a respective port on one of a plurality of service termination unit circuit cards 22-1,...,22-p.

The switching matrix for connecting the service lines 16 to the user lines 18 is distributed among the service termination unit circuit cards 22-1,...,22-p so that each of the service termination unit circuit cards 22-1,...,22-p includes thereon a plurality of service termination units for connection to a group of the service lines 16 and a portion of the overall switch matrix. The line termination unit circuit cards 20-1,...,20-n and the service termination unit circuit cards 22-1,...,22-p are installed on opposite sides of a centerplane board 24, represented schematically in FIG. 2 by a dot-dash line, in such a manner that every line termination unit circuit card 20-1,..., 20-n is connected to the switch matrix portion of every service termination unit circuit card 22-1,...,22-p, as will be described in full detail hereinafter.

Within the enclosure 10, there is also provided a controller circuit card 26 which is mounted to the centerplane board 24 on the same side thereof as the service termination unit circuit cards 22-1,...,22-p. The controller circuit card 26 is connected to the management station 14 in a suitable manner, such as through an RS-232 link or a modem. To effect communications between the controller circuit card 26, the line termination unit circuit cards 20-1,...,20-n, and the service termination unit circuit cards 22-1,...,22-p, a multi-line communications bus is provided on the centerplane board 24. Each of the controller circuit cards 26, the line termination unit circuit cards 20-1,...,20-n, and the service termination unit circuit cards 22-1,...,22-p, is provided with a respective transceiver 28, 30 and 32 which is coupled to the communications bus when the respective circuit card is mounted to the centerplane board 24.

Each of the service termination unit circuit cards 22-1,..., 22-p includes a memory which contains a map of all the connections through the switch matrix portion on the respective service termination unit circuit card, and the controller circuit card 26 includes a memory which contains a map of all of the connections in the entire cable management system within the enclosure 10. The management station 14 issues commands to the circuitry on the controller circuit card 26. These commands include a connect command to make a connection between one or more specified service lines 16 and one or more specified user lines 18, and a disconnect command to open a connection between a specified one of the service lines 16 and a specified one of the user lines 18. The circuitry on the controller circuit card 26 places each appropriate command onto the communications bus on the centerplane board 24, from which it is received by the transceiver 32 on the specified one of the service termination unit circuit cards 22-1,...,22-p, which then controls its respective switch matrix portion in accordance with the received command to either make or open the specified connection.

Also shown in FIG. 2 is a line test card 50 for effecting testing of the user lines 18 according to this invention, under the control of the management station 14. The line test card 50, to be described in more detail hereinafter, includes a transceiver 52 coupled to the communications bus on the centerplane board 24 and a line tester 54. Like the service termination unit circuit cards, the line test card 50 also has a switch matrix portion. The transceiver 52 provides a means for communicating with the line tester 54 and for receiving commands to effect connections between the line tester 54 and a selected one of the user lines 18 through the switch matrix portion of the line test card 50.

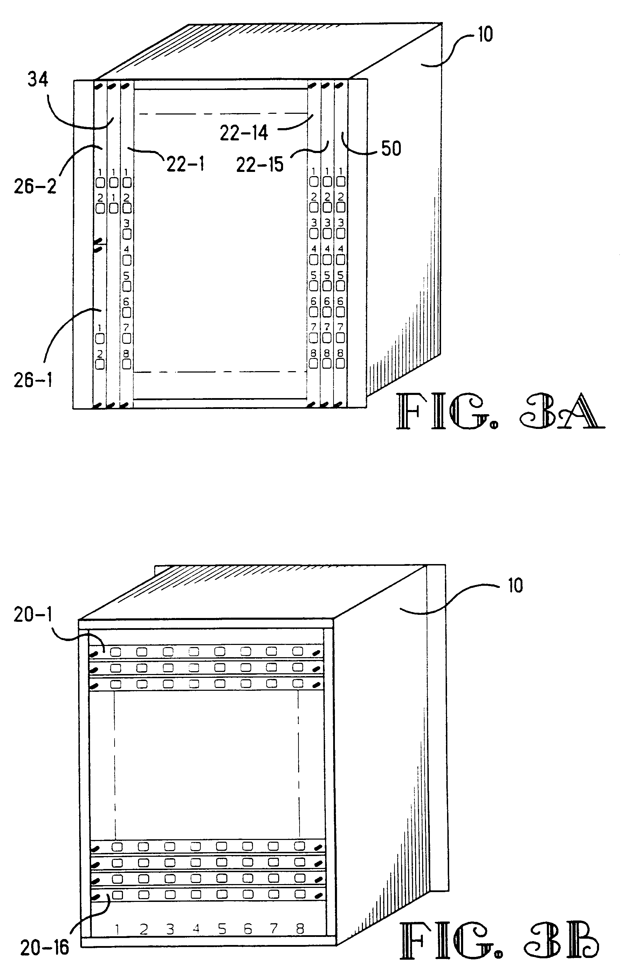

As shown in FIG. 3A, there are illustratively fifteen service termination unit circuit cards 22-1,...,22-15 which are installed vertically in the enclosure 10 from the rear thereof. In addition, the controller circuit card 26, which is comprised of two half-cards 26-1 and 26-2, is also installed vertically, as is an additional controller circuit card 34, which plays no part in the present invention. Further, the line test card 50 is installed vertically on the same side of the centerplane board 24 as the service termination unit circuit cards 22-1,...,22-15, and within a dedicated one of the connectors 36. As shown in FIG. 3B, there are illustratively sixteen line termination unit circuit cards 20-1,...,20-16 which are installed horizontally in the enclosure 10 from the front thereof. Each of the line termination unit cards 20-1,...,20-16 and the service termination unit circuit cards 22-1,...,22-15 has eight ports terminated by a respective media-specific connector on the visible edge of the circuit card away from the centerplane board 24.

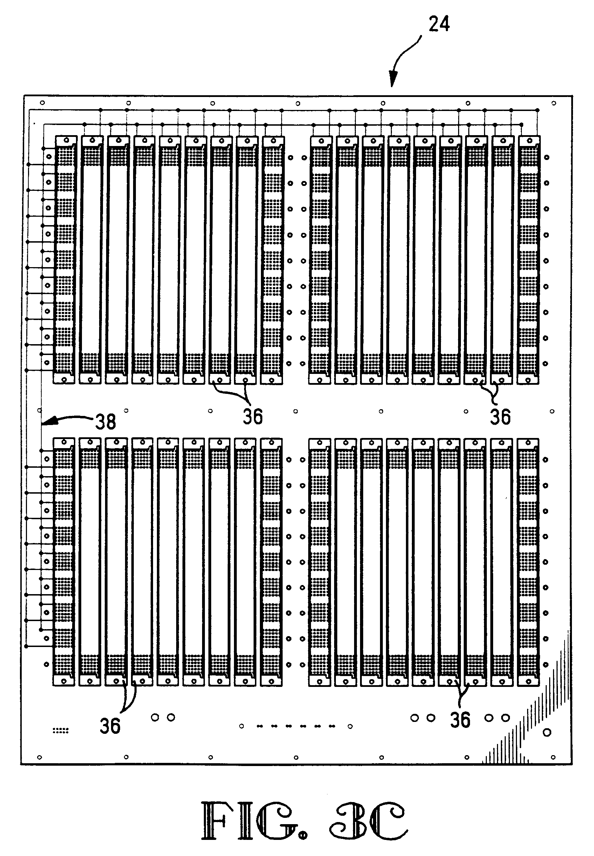

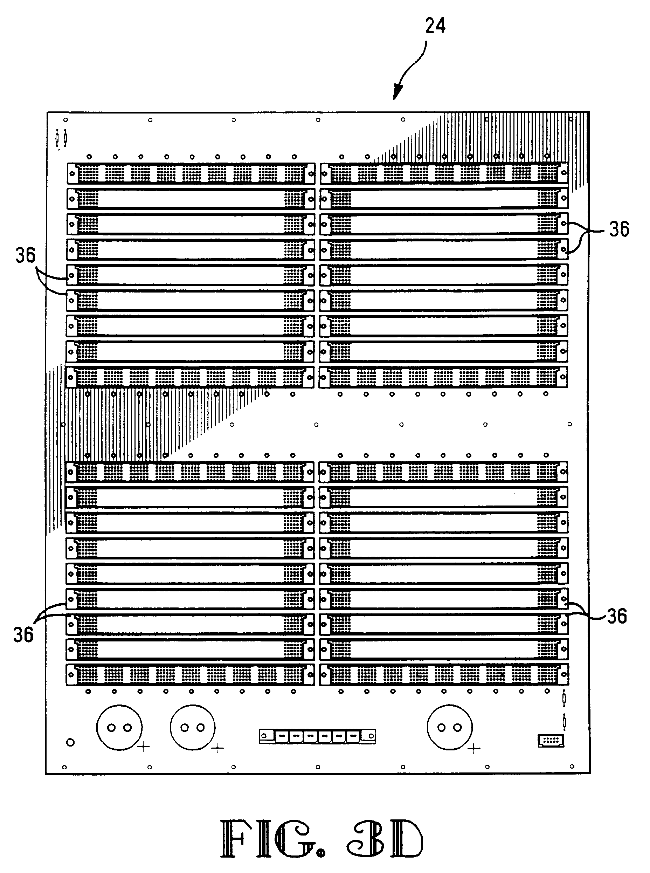

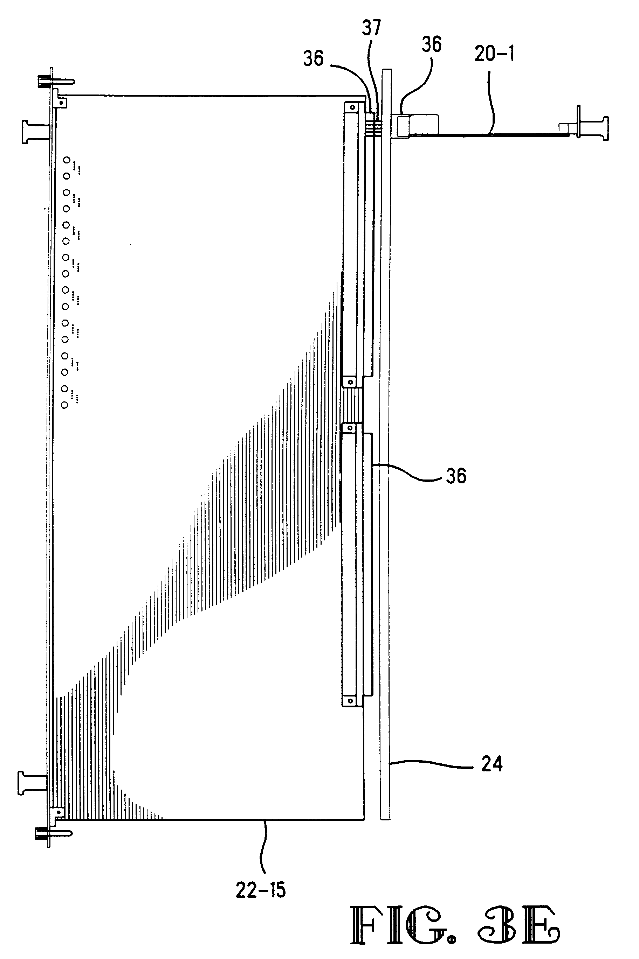

FIGS. 3C and 3D illustrate opposite sides of the centerplane board 24. Specifically, FIG. 3C shows the side of the centerplane board 24 on which the service termination unit circuit cards, the controller circuit cards, and the line test card are mounted and FIG. 3D shows the side of the centerplane board 24 on which the line termination unit circuit cards are mounted. Thus, as shown in FIG. 3C, for each of the service termination unit circuit cards, the controller circuit cards and the line test card there is provided a pair of vertically oriented card edge connectors 36. Likewise, as shown in FIG. 3D, on the other side of the centerplane board 24 there is provided for each of the line termination unit circuit cards a pair of horizontally oriented card edge connectors 36. (The top and bottom rows of connectors 36 are not utilized.) Each of the card edge connectors 36 has within it nine fields, each of which includes thirty six pins arranged in a 6x6 square matrix. The pins extend through the centerplane board 24 to a corresponding field in one of the card edge connectors 36 on the other side of the board 24, thereby interconnecting the connectors 36 on both sides of the board 24.

Illustratively, each of the service termination unit circuit cards 22-1,...,22-15 and the line termination unit circuit cards 20-1,...,20-16 has eight input/output ports. Each of these ports is a four wire port and each of the four wires of each port of the line termination unit circuit cards is connected to each of sixteen of the pin fields in the pair or connectors 36 to which its card is connected. This accounts for 8 x 4 = 32 of the thirty six pins of each field. The remaining four pins in each of those sixteen pin fields are reserved for power, ground and control signals. Similarly, each of the four wires of a service termination unit circuit card port is connected to the switch matrix portion on that service termination unit circuit card. The outputs of each service termination unit circuit card's switch matrix portion are eight 4-wire bundles which are each connected to four pins of each of sixteen of the pin fields of the connector 36 associated with that service termination unit circuit card. Again, that accounts for thirty two of the thirty six pins in each of those sixteen pin fields, with the remaining four pins being reserved for power, ground and control signals.

Because of the orthogonal relationship of the connectors 36 on both sides of the centerplane board 24, every port of a line termination unit circuit card is connected to a pin field connected to every one of the service termination unit circuit cards on the other side of the centerplane board 24. Thus, FIG. 3E illustrates how the line termination unit circuit card 20-1 is connected to a pin field of the service termination unit circuit card 22-15, as well as to all corresponding pin fields of all the other fourteen service termination unit circuit cards. As shown in FIG. 3E, the pins 37 (a 6x6 array) connect the card edge connectors 36 on the two sides of the centerplane board 24 at their intersection (i.e., at their common pin fields). Illustratively, the line termination unit circuit cards 20-1,...,20-16 take up the second through the seventeenth rows of the horizontal connectors 36 on their side of the centerplane board 24. The top and bottom rows are vacant. Similarly, the service termination unit circuit cards 22-1,...,22-15 take up the third through the seventeenth columns of the vertical connectors 36 on their side of the board 24. Thus, through the switch matrices on the service termination unit circuit cards, any one of the service lines 16 can be connected to any one of the user lines 18. In the illustrative embodiment, there are fifteen service termination unit circuit cards, each with eight ports, for a total of 120 service ports and there are sixteen line termination unit circuit cards, each having eight ports, for a total of 128 user ports. Each switch matrix portion on a service termination unit circuit card is an eight port by 128 port (32 by 512 lines) matrix of crosspoints. Thus, as disclosed, each of the 120 service lines can be connected to each of the 128 user ports.

As shown schematically in FIG. 3C, there is a multi-wire communications bus 38 on the centerplane board 24. The bus 38 extends parallel to the leftmost column of the vertical connectors 36 and parallel to the upper row of the horizontal connectors 36 (not shown in FIG. 3C) on the other side of the board 24. In order that the transceivers 28, 30, 32 and 52 may be interconnected, the bus 38 is terminated at the pin fields in the second through seventeenth rows of the leftmost column for connection to the transceivers 30 on all of the line termination unit circuit cards 20-1,...,20-16; at the upper pin fields in the third through eighteenth columns for connection to the transceivers 32 on all of the service termination unit circuit cards 22-1,...,22-15 and to the transceiver 52 on the line test card 50; and at the upper pin field of the first column for connection to the transceiver 28 of the controller circuit card 26.

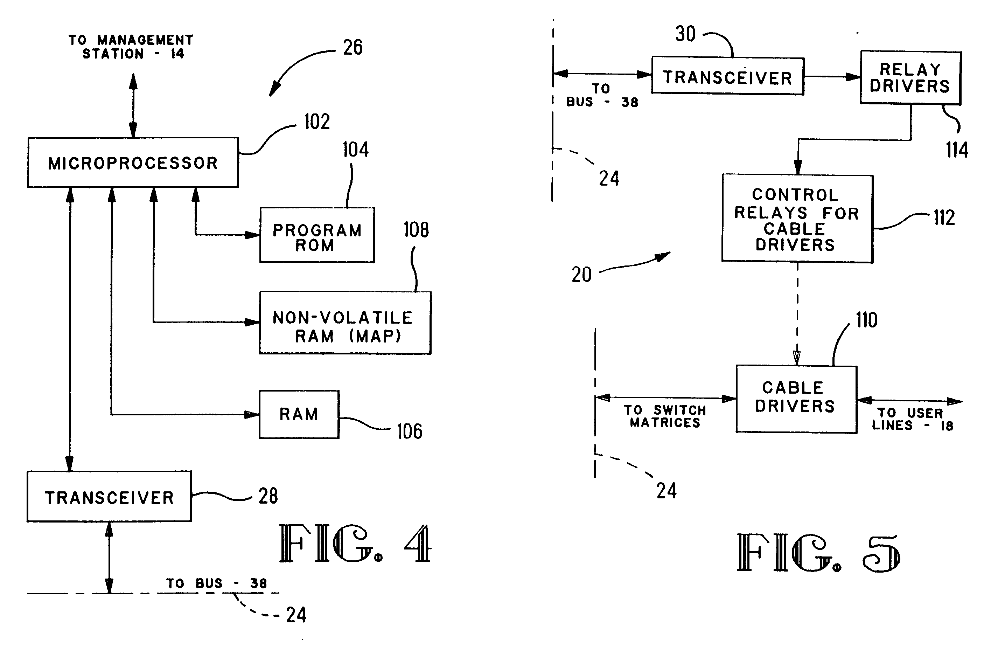

FIG. 4 illustrates circuitry on the controller circuit card 26 which may be utilized in the cable management system with which the present invention is concerned. The controller 26 includes a microprocessor 102 which is associated with three different types of memory. The first type of memory is a program read only memory (ROM) 104 which has stored therein the program instructions for operating the microprocessor 102. The microprocessor 102 is also associated with a random access memory (RAM) 106 which is utilized as a temporary storage memory by the microprocessor 102. Lastly, there is a non-volatile random access memory 108 which is utilized to store a map showing all of the connections through the switch matrix portions on the service termination unit circuit cards 22-1,...,22-15 as well as information as to what type of card is installed in each of the connectors 36. The non-volatile RAM 108 may be an electrically erasable PROM or a "flash" PROM which saves its contents even when power is lost. Since it takes a relatively long time to write information into the non-volatile RAM 108, the RAM 106 is used to temporarily store the map until such time as it is written into the non-volatile RAM 108.

The microprocessor 102 is coupled to the management station 14 in any suitable manner, such as by an RS-232 link or a modem, or through a local area network. The microprocessor 102 receives commands from the management station 14, such as a connect command or a disconnect command as described above, and in accordance with the program stored in the ROM 104 transmits instructions over the bus lines 38 on the centerplane board 24 via the transceiver 28. Illustratively, the transceiver 28 is a Neuron chip manufactured by Echelon Corp. The microprocessor 102 addresses a specified one of the service termination unit circuit cards 22-1,...,22-15 over the bus 38 via the transceiver 28 and provides an appropriate instruction for controlling the switch matrix portion of that service termination unit circuit card. The microprocessor 102 receives acknowledgements of its instructions, which are returned over the bus 38 from the specified service termination unit circuit card, via the transceiver 28, and updates the map stored in the non-volatile RAM 108.

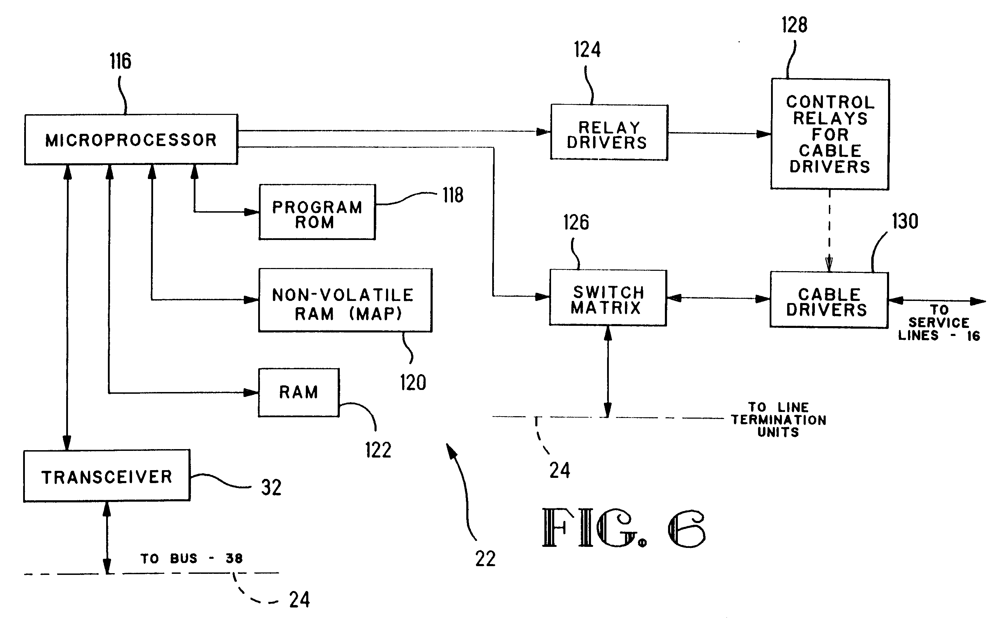

The line termination unit circuit card 20 illustrated in FIG. 5 includes the transceiver 30 coupled to the bus lines 38 on the centerplane board 24. Illustratively, the transceiver 30 is a Neuron chip manufactured by Echelon Corp. The function of the line termination unit circuit card 20 is to provide interfaces between the user lines 18 and the switch matrices on the service termination unit circuit cards 22-1,...,22-15 mounted on the other side of the centerplane board 24. This interfacing takes place through the cable drivers (amplifiers) 110 which are selectively controllable to pass signals either from individual ones of the service lines 16 to individual ones of the user lines 18 or in the reverse direction from individual ones of the user lines 18 to individual ones of the service lines 16, as determined by the settings of respective ones of the control relays 112. The control relays 112 are controlled by the relay drivers 114 which are operated on the basis of instructions received via the transceiver 30 from the microprocessor 102 of the controller 26 over the bus lines 38 on the centerplane board 24. Initially, all the cable drivers 110 are set to pass signals in the direction from the user lines 18 to the service lines 16, with the cable drivers being bypassed. This is for safety reasons so that upon system start-up dangerously high amplified signals are not inadvertently transmitted to the user lines 18, where they could damage sensitive equipment.

FIG. 6 illustrates the circuitry 22 on one of the service termination unit circuit cards 22-1,...,22-15. This circuitry includes a microprocessor 116 having associated therewith three types of memory. There is a program ROM 118, a non-volatile RAM 120 and a RAM 122. These memories function similarly to the memories 104, 106 and 108, respectively, associated with the microprocessor 102 of the controller 26, but are specifically for the particular one of the service termination unit circuit cards 22-1,...,22-15 with which they are associated. The microprocessor 116 is coupled to the transceiver 32, which is illustratively a Neuron chip manufactured by Echelon Corp. The transceiver 32 is coupled to the bus lines 38 on the centerplane board 24 and is utilized for communications between the microprocessor 116 and the microprocessor 102 on the controller circuit card 26. Instructions received by the microprocessor 116 via the transceiver 32 over the bus 38 from the microprocessor 102 are utilized to control the relay drivers 124 and the switch matrix 126. The relay drivers 124 set the control relays 128 so that the cable drivers 130 interposed between the service lines 16 and the switch matrix 126 are "pointing" in the proper directions. Again, as with the cable drivers 110 associated with the line termination unit circuit cards 20-1,...,20-16, the cable drivers 130 are initially bypassed. The switch matrix 126 is connected to all of the line termination unit circuit cards 20-1,...,20-16 mounted on the other side of the centerplane board 24, as previously described, so that any one of the service lines 16 entering that particular service termination unit card may be connected to any one of the user lines 18. In accordance with instructions received from the microprocessor 102 on the controller circuit card 26, the microprocessor 116 controls the switch matrix 126 to make an appropriate physical electrical connection therethrough between a specified one of the service lines 16 entering that card and a specified one of the user lines 18 entering any one of the line termination unit circuit cards 20-1,...,20-16 on the other side of the centerplane board 24.

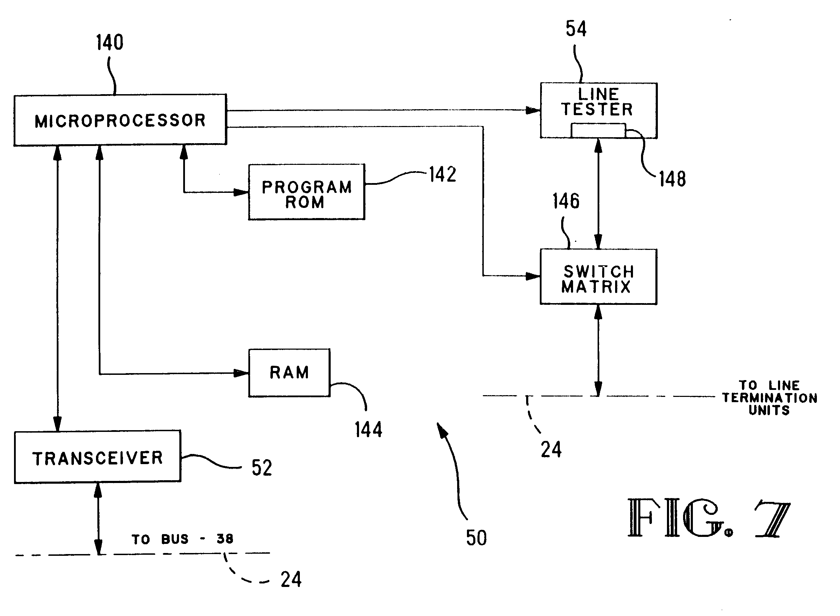

FIG. 7 illustrates circuitry on the line test card 50. This circuitry includes a microprocessor 140 having associated therewith two types or memory. There is a program ROM 142 and a RAM 144. These memories function similarly to the memories 104 and 108, respectively, associated with the microprocessor 102 of the controller 26, but are specifically for the line test card 50. The microprocessor 140 is coupled to the transceiver 52, which is illustratively a Neuron chip manufactured by Echelon Corp. The transceiver 52 is coupled to the bus lines 38 on the centerplane board 24 and is utilized for communications between the microprocessor 140 and the microprocessor 102 on the controller circuit card 26. Instructions received by the microprocessor 140 via the transceiver 52 over the bus 38 from the microprocessor 102 are utilized to control the line tester 54 and the switch matrix 146.

The line tester 54 is illustratively similar to the MT350 Scanner manufactured by Microtest Inc. of Phoenix, Arizona, but modified for mounting on a circuit card rather than within a handheld enclosure. Such a device is described in U.S. Patent No. 4,970,466, issued November 13, 1990, the contents of which are hereby incorporated by reference herein. The tester 54 is capable of selectively evaluating various characteristics of a line connected to its output port 148. For example, the tester 54 can determine the length of a line, its capacitance and its resistance. The tester 54 can also evaluate the near end crosstalk of a line, its attenuation characteristics at various frequencies and the noise on a line within various frequency bands. Further, the tester 54 can also be controlled to automatically run a combination of these tests.

The output port 148 of the line tester 54 is illustratively a single four wire port. Since it is desired that the output port 148 be connectable to any of the 128 user lines 18, the switch matrix 146 is configured as a one port by 128 port (4 by 512 lines) matrix of crosspoints.

In the situation where an operator at the management station 14 is advised of a problem on a particular user line, it is presumed that there will be no activity on that user line until the problem is resolved. In the situation where testing of a user line for routine maintenance is to be performed, such testing is scheduled for a time when it is presumed that there will be no activity on that user line (e.g., during early morning hours). Therefore, whenever a particular user line is to be tested, the operator at the management station 14 first sends a disconnect command to the controller 26 to open the path from that user line to whichever of the service lines it is connected. Then, an appropriate test command is generated at the management station 14 and transmitted to the controller 26. The controller 26 then provides the appropriate instruction to the microprocessor 140 on the line test card 50, via the transceiver 28, the bus 38 and the transceiver 52. The microprocessor 140 then sets up the appropriate connection through the switch matrix 146 between the line tester 54 and the designated user line and causes the line tester 54 to run the designated test(s). The test data is transmitted by the line tester 54 to the microprocessor 140 which in turn sends the test data to the controller 26. The controller 26 transmits the test data to the management station 14, where it is displayed to the operator and stored for future reference. In addition to testing the user lines 18 when a problem surfaces or for routine maintenance purposes, the disclosed system also tests the user lines 18 upon initial system installation to develop an "as-built" data base of user line characteristics.

Accordingly, there has been disclosed an improved cable management system for providing connections between service lines and user lines, and which has the capability of remotely controlling testing of the user lines.

## Claims

1. A tester in a cable management system comprising, multiple communications service lines interconnected to multiple communications user lines,
characterized by;
multiple STU (service termination unit) cards (22) connected to respective multiple service lines (16),
multiple LTU (line termination unit) cards (20) connected to respective multiple user lines,
a line test card (50),
a connecting unit (24, 36, 37) interconnecting each of the STU cards (22) and the line test card (50) to every one of the LTU cards (20),
a line tester (54) for evaluating a user line connected to an output port (148) of the line tester (54), and
a switch matrix (146) selectively connecting the output port 148) to one of among many of the user lines.

2. A tester as recited in claim 1, further characterized by;
a transceiver (52) coupled to the switch matrix (146), and
a management station (14) coupled to the transceiver (52) over a communications bus (38) to activate the switch matrix (146) for connection of the output port to one of among many of the user lines.

3. A tester as recited in claim 1, characterized in that the connecting unit (24,36,37) includes a centerplane board (24), a first plurality of card edge connectors (36) on a first side of the centerplane board (24) arranged in a first parallel array, a second plurality of card edge connectors (36) on the other side of the centerplane board (24) arranged in a second parallel array orthogonal to the first parallel array, and pins (37) for electrically connecting each of the first plurality of card edge connectors (36) to each of the second plurality of card edge connectors (36) through the centerplane board (24), each of the multiple of STU (service termination unit) cards (22) being mounted to a respective one of the first plurality of card edge connectors (36), each of the multiple of LTU (line termination unit) cards (20) being mounted to a respective one of the second plurality of card edge connectors (36), and wherein the line test card (50) is connected to a dedicated card edge connector (36) on the first side of the centerplane board (24), the dedicated card edge connector being parallel to the first plurality of card edge connectors (36), orthogonal to the second plurality of card edge connectors (36), and electrically connected to each of the second plurality of card edge connectors (36) through the centerplane board (24).

4. A tester as recited in claim 2, characterized in that the management station (14) is further effective to control the disconnection of the selected one of the user lines from the service line to which it is connected prior to effecting the connection of the output port to the selected one of the user lines.

5. A tester as recited in claim 2, characterized in that the line test card includes a microprocessor (140) and a transceiver (52) for transmitting evaluation results to the management station (14).
